# EUROPEAN PATENT SPECIFICATION

(11) **EP 2 401 071 B1**
(45) Date of publication and mention of the grant of the patent: **30.06.2021**
(21) Application number: 10706794.4
(22) Date of filing: 01.03.2010
(51) Int. Cl.: B01J 31/12

(54) **PROCESS FOR THE PREPARATION OF METAL-CARBON CONTAINING BODIES**
VERFAHREN ZUR HERSTELLUNG VON METALLKOHLENSTOFF ENTHALTENDEN KÖRPERN
PROCÉDÉ POUR LA PRÉPARATION DE CORPS CONTENANT DU CARBONE ET DU MÉTAL

(30) Priority: 27.02.2009 EP 09153963
(43) Date of publication of application: 04.01.2012
(73) Proprietor: BASF Corporation, Florham Park, NJ 07932 (US)
(72) Inventor: HOEKSTRA, J., NL-3584 DX Utrecht (NL); GEUS, John Wilhelm, NL-3723 GJ Bilthoven (NL); JENNESKENS, L.W., NL-3762 DA Soest (NL); VAN DE KLEUT, D., NL-3824 VE Amersfoort (NL); VLIETSTRA, E.J., NL-3401 PS IJsselstein (NL)
(74) Representative: BASF IP Association
(86) International application number: PCT/NL2010/050099
(87) International publication number: WO 2010/098668

(56) References cited:
- WO-A1-2009/098812
- DE-A1- 4 234 785
- DE-A1- 10 003 660
- DE-A1-102006 022 866
- DE-C1- 4 416 576
- US-A1- 2003 119 665
- Deon Hines ET AL: "Surface Properties of Porous Carbon Obtained from Polystyrene Sulfonic Acid-Based Organic Salts", Langmuir, vol. 20, no. 8, 1 April 2004 (2004-04-01), pages 3388-3397, XP055084543, ISSN: 0743-7463, DOI: 10.1021/la0360613

## Description

The invention is directed to a process for the production of metal-carbon containing bodies as described in the claims.

Generally, catalytically active materials are applied to highly porous materials in more or less fine distributions. On the one hand this is done because many catalytically active materials sinter quickly at the temperatures at which the catalyst must be pre-treated or used. On the other hand one must use carrier materials in the case of very expensive catalytically active materials, such as precious metals, for example platinum, palladium, or ruthenium. In those cases the aim is to obtain a maximum number of atoms of the catalytically active component on the surface of the catalytically active particles. Therefore, these catalytically active materials are often used as particles with sizes of about 1 nm. When expensive catalytically active materials, such as precious metals, are used, carbon based carriers are very attractive. Once the catalyst is deactivated, the precious metal can easily be reclaimed by oxidising the carbon carrier. After oxidation the precious metal remains, and can be used again.

The mechanical strength of the catalyst carriers is of great importance in their application. This applies first of all to the use of catalysts suspended in a liquid phase. To keep the catalytically active particles well dispersed in the liquid, the liquid must be agitated vigorously. Furthermore, the catalyst must be separated from the liquid, for example by filtration or centrifugation, at the completion of the reaction. During this, carrier particles with a low mechanical strength will disintegrate, yielding extremely small particles. At the current state-of-the-art such particles cannot easily be separated by filtration or centrifugation. In particular when precious metals are used as the catalytically active materials this is unacceptable, because it will result in unacceptable losses of the expensive precious metal. The mechanical strength is also of great importance when the catalyst is used as a fixed bed catalyst. During the introduction of the catalyst bodies in the reactor virtually no attrition or dust generation is allowed. Dust generation results in a large pressure drop over the catalyst bed, while small attrition-generated particles are entrained by the reactant flow that is passed through the reactor. The formation of small particles by attrition also yields a catalyst that shows a non-stable performance in time. Very often the selectivity decreases. Both effects are unwanted, since a stable performance is necessary from a controlling and safety aspect.

According to the general state-of-the-art, activated carbon is used as the carbon carrier. Activated carbon is manufactured from natural materials, such as wood or peat. This is objectionable, because generally the characteristics of the activated carbon obtained from such materials are hard to control. Providing bodies comprising active carbon with constant, well-adjustable characteristics is therefore a known problem that hasn't been satisfactorily solved until now. An additional objection is the fact that, in the presence of (small amounts of) surfactants, such as detergents, in the liquid the catalyst particles must be dispersed in, catalyst bodies produced from activated carbon might disintegrate quickly.

In the case of bodies intended for a fixed catalyst bed, in which no attrition is allowed, the most obvious possibility is the use of carbon obtained by a thermal treatment of coconut shells. This provides very tough and mechanically strong bodies. However, the fact that the accessible surface of carbon obtained by thermal decomposition of coconut shells is small, is a drawback. As a result the obtainable catalytically active surface per unit volume is relatively small.

The final drawback of carrier materials produced from natural starting materials is their chemical composition. Natural materials often contain elements such as potassium, magnesium, calcium, and sulphur, which could cause problems during the use as catalyst or the recycling of the precious metals. There is, therefore, a strong technological need for carbon based carriers with a high mechanical strength and an extremely well controlled chemical composition that can consequently be produced from a source wherein the properties of which can be better controlled than from peat and wood starting materials.

It has been proposed to manufacture such catalyst carriers from carbon nanofibres or nanotubes. In WO 93/24214 (Hyperion) it is proposed to use carbon nanofibres or nanotubes as catalyst carriers in which the graphitic layers are oriented essentially in parallel to the filament axis. The use of such relatively long and straight carbon filaments as bodies with controllable dimensions is difficult.

The bodies of catalysts to be employed in a fixed catalyst bed must have a minimum size of about 1 mm. The pressure drop with smaller particles is too high with technical applications. It has proven to be very difficult to manufacture mechanically strong bodies from these sizes from the carbon nanofibres or nanotubes described above.

Indeed, for catalysts the dimensions and porosity are of great importance. In fixed catalyst beds the dimensions of the carrier bodies determine the pressure drop and the transport of reactants and reaction products through the catalyst bodies. In the case of liquid-suspended catalysts the transport of the reactants and reaction products is of great importance. The dimensions of the catalyst bodies are, as indicated above, of great importance to these transports, as well as to the separation of the bodies, for example by filtration of centrifugation. Another drawback is the fact that carbon nanofibres or nanotubes must be grown from metallic particles applied on carriers such as silicon dioxide or aluminium oxide. These carriers can often interfere with the application of the obtained carbon carriers in liquid phase reactions.

It has been proposed to manufacture carbon-based carrier bodies by thermal decomposition of spheres of microcrystalline cellulose WO 2007/131795 (Glatt). Such spheres are known in the state-of-the-art for the controlled release of medicinal compounds ("slow release"). It was found that carbon spheres with a very high mechanical strength could be produced this way. Considering the fact that microcrystalline cellulose spheres with dimensions of about 0.1 to 0.7 mm are produced industrially, the above carbon spheres can be manufactured with a consistent quality.

A drawback of microcrystalline cellulose is its high price. During the thermal treatment of the microcrystalline cellulose spheres their weight decreases by 80%. This means that the cost per unit weight of the carrier in comparison to carbon spheres obtained according to the state-of-the-art becomes very high.

The present invention is directed to a process for the production of metal-carbon containing bodies, which process comprises impregnating cellulose, cellulose-like or carbohydrate bodies with an aqueous solution of at least one metal compound, followed by heating the impregnated bodies in an inert and substantially oxygen-free atmosphere at a temperature above 700°C, thereby reducing at least part of the at least one metal compound to the corresponding metal or metal alloy, and wherein the metal(s) is (are) selected from iron, nickel, cobalt or alloys thereof.

The metal or metals are ferromagnetic. It has been found that in case these metal(s) such as iron, nickel and cobalt or alloys thereof are used, the process results in an encapsulation of the metal by graphitic carbon layers, resulting in a core of a metal (alloy) and a shell of carbon, or an agglomerate of several or many of such encapsulated metal particles. The catalytically active component is applied after the thermal treatment according to the state-of-the-art.

Surprisingly, it was found that the impregnation of the cellulose or cellulose-like bodies with compounds of elements that upon reduction react to form ferromagnetic materials during the thermal decomposition of the cellulose, yields strongly ferromagnetic bodies. The ferromagnetic metallic particles are encapsulated by the graphitic layers after the thermal decomposition, and therefore no metal is dissolved upon treatment with a(n) (strong) acid. Therefore, the present invention also relates to ferromagnetic carbon bodies. Obviously, the invention also relates to the loading of carbon bodies with a ferromagnetic material with a low coercitive force.

A problem that sometimes occurs with the use of carbon bodies, especially produced from microcrystalline cellulose, is the fact that the external surfaces of the spheres contain relatively few pores. The low porosity of the surface of carbon bodies produced from microcystalline cellulose has been mentioned in WO2007/131795 (Glatt). In the case of liquid phase processes with fast occurring catalytic reactions transport limitations are not apparent, such reactions almost exclusively take place at the external surface of the catalyst bodies. However, in the case of reactions proceeding more slowly it is a drawback, because catalytic particles that are present in the interior of the catalyst bodies are not easily accessible to the reactants. Nevertheless, attrition of the catalytically active particles from the surface of the carbonaceous bodies proceeds readily. Surprisingly, it was found that a treatment with acid compounds results in the hydrolysis of the cellulose containing compounds, inducing a much higher porosity of the external surface of the carbon bodies upon a subsequent thermal treatment.

According to this preferred embodiment of the invention, the specific surface area of the bodies is increased by increasing the porosity of the graphitic carbon. According to the invention this is done by treating the particles prior to thermally carbonizing with an acidic material. This creates an increased porosity, which is maintained during drying and carbonizing, resulting in a graphitic material having increased surface area, generally in the range of 100 to 1750 m²/g.

The ferromagnetic bodies or particles with the graphitic coating are catalytically active as such, for those reactions that are catalysed by graphitic carbon.

In a further preferred embodiment, the ferromagnetic bodies or particles may be loaded with a catalytically active material, such as a base metal or precious metal. For this the usual state of the art methods for applying catalytically active material may be used. Since the carbonaceous support is hydrophobic, the usually strongly retarding effect of water on the reduction to the metal is not or much less exhibited.

Surprisingly, it was further found that from alternative cellulose and/or carbohydrate containing materials, such as soy meal, rice, furfural and derivatives, such as 2-hydroxyfurfural, sugar, hydroxyl ethyl cellulose, cellulose and derivatives and the like, spheres can be produced that also yield mechanically strong carbon spheres upon thermal decomposition. Considering the fact that soy meal is much cheaper in comparison to the very pure microcrystalline cellulose, this is an essential advantage.

Another suitable starting material for the production of carbon spheres is sugar, or a mixture of sugar and microcrystalline cellulose or soy meal. During the thermal decomposition of spheres that predominantly or exclusively comprise sugar, care should be taken that during heating the temperature at which the sugar melts is passed by so quickly that the sugar will decompose before the melting process progresses. Dehydration of the sugar by a hydrothermal treatment before raising the temperature to the pyrolizing temperature has been found to be effective too. Given the low price of sugar and the other cellulose containing materials, the present invention is of great importance for the technical application of mechanically strong carbon particles.

In general the cellulosic or carbohydrate starting materials will comprise organic materials, generally of renewable sources, that have the property that upon pyrolysis under inert conditions, a gas having reducing properties is obtained. According to a preferred procedure according to the present invention we start from carbonaceous bodies produced by a hydrothermal treatment of agriculturally produced materials, such as, sugars, starch, soy meal, (hemi)cellulose, as well as hydrothermal treatment of partly dehydrated products of the above compounds, such as, furfural and 2-hydroxyfurfural. Preferably dehydration af the above compounds is performed as described in Bo Hu, Shu-Hong Yu, Kan Wang, Lei Liu and Xue-Wei Xu Dalton Trans. 2008, 5414-5423 and in references mentioned therein. After impregnation of the hydrothermally treated bodies, the thermal treatment according to the procedure of the present invention is executed. Alternatively, a solution of the metal compounds can also be mixed within the water employed in the hydrothermal treatment.

According to a further preferred embodiment it is thus possible to use relatively cheap materials for the production of the (ferromagnetic) support bodies, such as soy flour, sugar, or more in general carbohydrates, but also cellulose and cellulose-like materials, including micro-crystalline cellulose, and mixtures of two or more thereof.

The ferromagnetic carbon spheres according to the invention can easily be adhered to a mesh of a ferromagnetic metal, such as iron or nickel. The mesh can be magnetised with a permanent magnet or an electromagnet. The significantly changed magnetic field around the filaments of the mesh results in a strong binding of the ferromagnetic carbon spheres to the mesh. By covering the metallic mesh with a silicon dioxide layer the metallic mesh can be rendered inert. A major advantage of attachment by a ferromagnetic force is the fact that the carbon spheres can easily be removed from the mesh by demagnetising the mesh.

Shaping of the initial cellulose containing material can be carried out according to the present state-of-the-art. Extrusion, if desired to rings or e.g., to trilobs can be executed. If required, addition of carboxymethylcellulose, hydroxyethylcellulose, hydroxypropylcellulose, methylcellulose, polyvinylalcohol, polyvinylpyrolidon, polyethyleneglycol can be employed to facilitate the extrusion and to raise the mechanical properties of the green extrudates. Small spheres to be employed for catalysts suspended in liquids are preferably produced by hydrothermal treatment as described in Bo Hu, Shu-Hong Yu, Kan Wang, Lei Liu and Xue-Wei Xu Dalton Trans. 2008, 5414-5423 and in references mentioned therein.

Typically activated carbon produced from peat or wood contains in addition to some graphitic planes, very small, clustered particles of amorphous carbon. The surface area of the activated carbon is very elevated, where the BET surface area is about 1200 m² per gram. However, the small particles of amorphous carbon enclose very narrow pores which limits access from a bulk liquid or gas flow.

Another drawback of activated carbon is the liability to oxidation. Treatment of the activated carbon with nitric acid at a temperature of about 90 °C results in the production of carbon dioxide. Also oxidation by atmospheric air during thermal treatments proceeds rapidly. Regeneration of activated carbon is therefore generally not possible. However the rapid oxidation of the activated carbon is advantageous in reclaiming precious metals with carbon-supported precious metal catalysts, since only the metal remains after oxidation of the carbon.

However, a more stable carbon catalyst support, such as graphitic carbon, would be very attractive. Conversion of the activated carbon into graphitic carbon would therefore be highly attractive. In particular a process in which shaped bodies of activated carbon can be reacted to graphitic carbon without adversely affecting the mechanical strength of the carbon bodies. An important characteristic of bodies of graphitic carbon produced out of activated carbon is that the pore-size distribution of the graphitic carbon bodies is much more favourable. Transport to the large internal surface of the graphitic carbon proceeds much more rapidly. Another embodiment of our invention involves metal-carbon bodies in which the carbon is almost completely present as graphitic material with a high surface area.

Surprisingly we have observed that production of such carbon bodies according to our invention is possible by loading the carbon precursor, or the carbon with particles of metals capable of forming metal carbides, and thermally treating the thus loaded carbon bodies in an inert gas atmosphere at a temperature above 700 °C. The thermal treatment leads to an essentially complete recrystallization of the amorphous carbon to graphitic carbon. Preferably the treatment is executed in a nitrogen atmosphere. More preferably the nitrogen atmosphere is purified from oxygen by passing through a fixed bed of a reduced copper catalyst. Even more preferably the nitrogen is employed mixed with about 0.5 vol.% of hydrogen and the nitrogen is passed over a supported palladium catalyst at room temperature.

The recrystallization of the amorphous carbon can be achieved by applying nickel, cobalt, or iron on the activated carbon or on the precursor of the carbon-metal bodies according to the present invention. Most preferred is iron, in view of the availability and the price of iron. Surprisingly it has been found that employment of ammonium iron citrate as an iron precursor leads to recrystallization of the carbon at a lower temperature than iron(III) nitrate. Therefore ammonium iron citrate is preferred as an iron precursor.

The actual mechanism for this is effect is not known, but it is assumed that the reaction of the amorphous carbon is due to an intermediate reaction to a metal carbide. The amorphous carbon is thermodynamically unstable with respect to the carbon in the metal carbide. In contrast, graphitic carbon is thermodynamically more stable than the carbon in the metal carbide. To achieve the conversion of the amorphous carbon mobility of the metal particles over the graphitic surface is required; after conversion of the amorphous carbon the metal particles migrate over the graphitic surface to location where amorphous carbon is still present.

With metals and alloys that can be reduced at a relatively low temperature, such as, nickel or nickel-iron alloys, small metal particles result supported on the amorphous carbon. Since carbon atoms in metal carbides are already mobile at temperatures of about 350 °C, metals capable of forming metal carbides are often encapsulated in graphitic layers. The number of graphitic layers varies depending on the specific conditions of the thermal treatment and the reducibility of the metal, but three to about ten is usual.

In a specific embodiment of our invention the graphitic layers are removed by a thermal treatment in pure hydrogen. In pure hydrogen the thermodynamic equilibrium shifts to methane, causing the graphitic layers encapsulating the metal particles to be removed as methane. A compromise between the thermodynamic stability of graphite and the rate of removal of the graphitic layers has therefore to be set up. When the metal-carbon bodies are therefore to be employed as catalysts with the metal or alloy particles as the catalytically active component, a thermal treatment in pure hydrogen at a temperature where methane is thermodynamically stable rather than graphite according to a special embodiment of our invention.

The extent of encapsulation of the metal particles is determined by treatment the particles with a strong acid, such as hydrochloric acid and measuring the evolution of hydrogen. The metal-carbon bodies that are obtainable by the process of the present invention are to be employed as a ferromagnetic support, complete encapsulation is a prerequisite.

The invention is now elucidated on the basis of some examples, which are not intended to limit the scope of the invention.

### Example 1

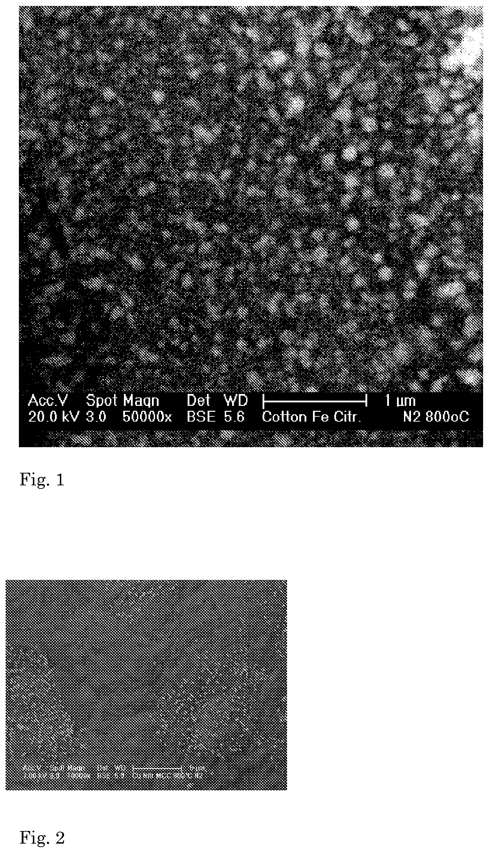

A piece of cotton fabric of 1 x 1 cm ² was wet-impregnated with a solution of ammonium iron citrate in water. Next the impregnated fabric was dried in air under ambient conditions. Subsequently, the fabric was kept at 800 °C in an inert nitrogen gas flow. This resulted in a ferromagnetic gauze of graphitic fibres of 0.2 mm diameter densely loaded with iron particles of diameters around 10 to 20 nm as evident from the accompanying micrograph (Fig. 1) which. The micrograph represents an image taken with back-scattered electrons in an scanning electron microscope. The back-scattered electrons are imaging the iron particles at a high intensity in view of the relatively high nuclear charge of iron atoms as compared to that of carbon.

### Example (not according to the invention)

Commercially available micro crystalline cellulose (MCC) spheres (Cellets, neutral pellets of Syntapharm GmbH, Mülheim an der Ruhr, Germany), with a size range of 100-200 µm, were loaded with copper nitrate by immersing the spheres in a solution of copper nitrate. The spheres were leftin the solution for 24 h during which the solution was occasionally stirred. The impregnated spheres were subsequently separated from the solution by filtering using a Büchner funnel with glass filter. The spheres were then dried at room temperature *in vacuo* to constant weight. Subsequently, the impregnated spheres were pyrolyzed by thermal treatment in a stagnant inert nitrogen gas atmosphere in a quartz tube reactor (Thermolyne 21100 furnace). The heating rate was 5 °C/min and the spheres were kept at 800 °C for 3 h. The thermal treatment resulted in metal-carbon of a size of approximately 70 µm.

This next micrograph (Fig. 2) represents an image of taken with back-scattered electrons in a scanning electron microscope. The back-scattered electrons are imaging preferably the heavy elements, and with the thus produced metal-carbon bodies the copper particles are imaged with a relatively high intensity. It can be seen that the external surface of the metal-carbon bodies contains many small metallic copper particles.

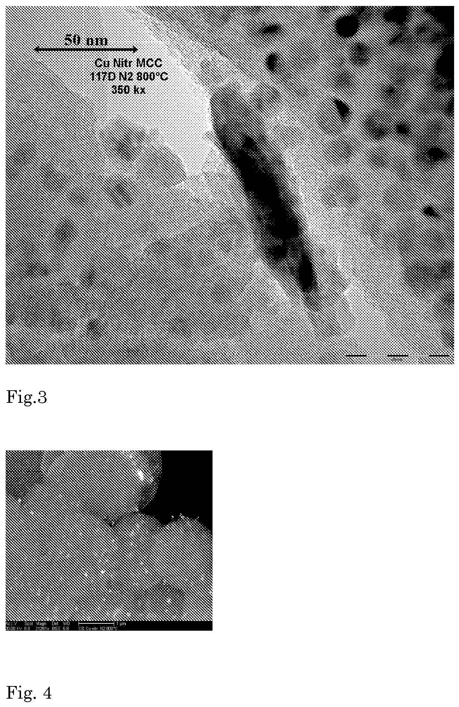

The above micrograph (Fig. 3) has been taken with a transmission electron microscope on a ground sample of the copper-carbon bodies prepared as described. Transmission electron shows that the complete volume of the carbon bodies contains numerous small copper particles. The presence of metallic copper was confirmed by elemental analysis. Evident is one big copper platelet present at the center of the micrograph. Importantly, carbon species can also be seen in the micrograph. The carbon is present as extremely small amorphous carbon particles. Therefore, even at 800 °C the amorphous carbon does not completely recrystallize to graphitic carbon.

### Example 3

AIM aqueous solution of sucrose in demineralised water was placed in a Teflon-lined autoclave. The solution was kept at 160 °C for 4h. Subsequently the solid product was separated from the liquid by centrifugation and washed with a mixture of ethanol, acetone and demineralised water, until a colourless solution was obtained. The resulting black powder was dried at room temperature *in vacuo* to constant weight. The hydrophilic colloidal carbon spheres were loaded by immersing the spheres into an aqueous solution of nickel nitrate. The spheres were left in the solution for 24 h during which the solution was occasionally stirred. Next, the impregnated spheres were separated from the solution using a Büchner funnel with glass filter. The thus obtained spheres were dried at room temperature in vacuo to constant weight. The impregnated spheres were subsequently pyrolyzed by thermal treatment within a stagnant inert nitrogen gas atmosphere in a quartz tube reactor (Thermolyne 21100 furnace). The heating rate was 5 °C/min and the spheres were treated for 3 h at 800 °C.

The next micrograph (Fig. 4) represents an image taken with back-scattered electrons in a scanning electron microscope. The back-scattered electrons are imaging the nickel particles at a relatively high intensity. The external edge of the metal-carbon bodies contains many small nickel particles. Transmission electron microscopy on a ground sample of the metal-carbon bodies shows that also the volume of the metal-carbon bodies contains numerous small nickel particles.

### Example (not according to the invention)

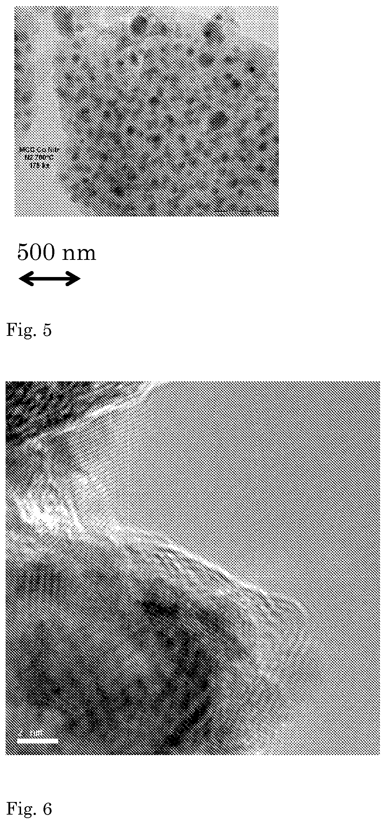

Commercially available micro crystalline cellulose (MCC) spheres (Cellets, neutral pellets of Syntapharm GmbH, Mülheim an der Ruhr, Germany), of a size range of 100-200 µm were loaded by immersing the spheres into an aqueous solution of cobalt nitrate. The spheres were left in the solution for 24 h during which the solution was occasionally stirred. Next, the impregnated spheres were separated from the liquid using a Büchner funnel with glass filter. The separated spheres were dried at room temperature *in vacuo* to constant weight. Subsequently, the impregnated spheres were pyrolyzed by thermal treatment in a stagnant inert nitrogen gas atmosphere in a quartz tube reactor (Thermolyne 21100 furnace). The heating rate was 5 °C/min and the samples were kept for 3 h at 700 °C. This resulted in metal-carbon containing bodies with ferromagnetic properties with a size of approximately 70 µm. The enclosed micrograph (Fig. 5) shows a mechanically pulverized sample with metallic cobalt particles present on a carbonaceous matrix. The image was taken with a transmission electron microscope.

Reduction of supported cobalt species to metallic cobalt is a relatively difficult process, since water vapour strongly inhibits the reduction. To demonstrate that the reduction to metallic cobalt proceeds smoothly with the procedure according to the present invention, the next micrograph (Fig. 6) has been taken from the same material at the very high magnification of 1.2 x 10⁶. At a high magnification the lattice plane of cobalt can be imaged. From the Fourier transform of the square indicated in the image the distance between the lattice planes has been calculated. The distance between the lattice planes is 0.191 nm, which agrees very well with the lattice distance of hexagonal cobalt, which amounts to 0,192 nm.

### Example : (not according to the invention)

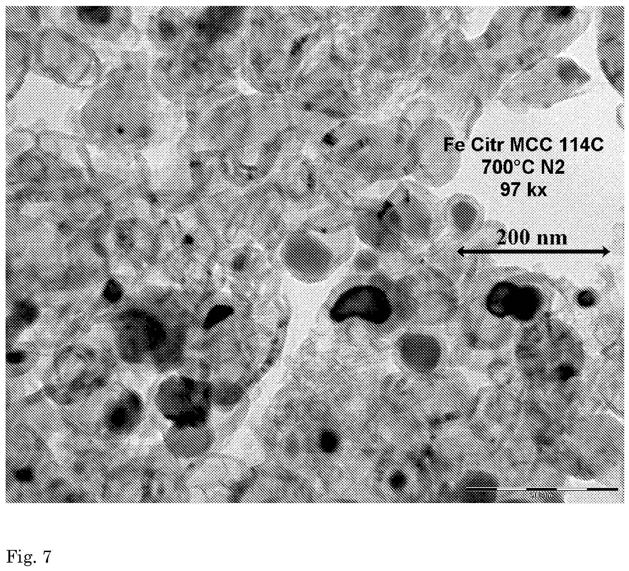

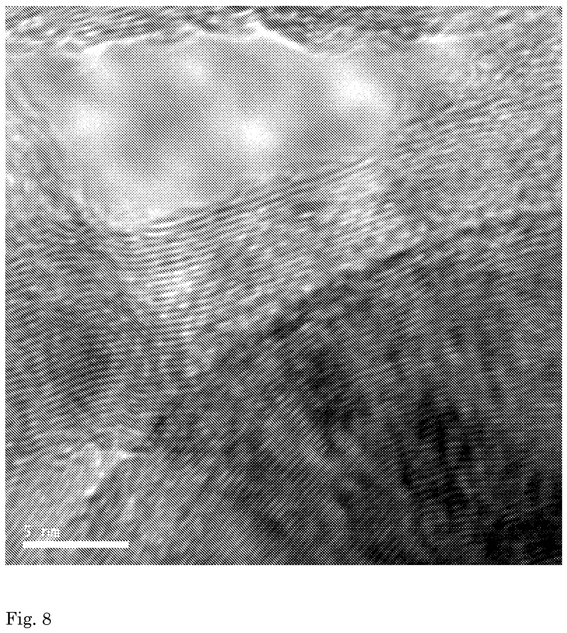

Commercially available micro crystalline cellulose (Mee) spheres (eellets, neutral pellets of Syntapharm GmbH, Mülheim an der Ruhr, Germany), with a size range of 100-200 µm were loaded by immersing the spheres into an aqueous solution of ammonium iron citrate. The spheres were left in the solution for 24 h during which the solution was occasionally stirred. Next, the impregnated spheres were separated from the liquid using a Büchner funnel with glass filter. The separated spheres were dried at room temperature in vacuo to constant weight. Subsequently, the impregnated and dried spheres were pyrolyzed by thermal treatment in a stagnant inert nitrogen atmosphere in a quartz tube reactor (Thermolyne 21100 furnace). The heating rate was 5 °C/min and the samples were treated for 3 h at 700 °C. This resulted in metal-carbon containing bodies with ferromagnetic properties with a size of approximately 70 µm. The enclosed micrograph (Fig. 7) has been taken from a ground sample after ultrasonic dispersion in ethanol. Iron particles (some partly) encapsulated by graphitic layers are apparent. The incomplete encapsulation was established by quantitatively measuring the evolution of hydrogen upon immersion in hydrochloric acid. The effect of the presence of iron, a metal capable of forming a metal carbide, is evident. No amorphous carbon is visible, only fibers of graphitic carbon. The difference with the transmission electron micrograph of Example 2 (Fig. 3) is striking; in spite of the lower temperature of 700 °C as compared to 800 °C employed with the sample of example 2, the carbon has completely recrystallized. To confirm the presence of carbon completely recrystallized to graphitic carbon the next micrograph (Fig. 8) has been taken at a high magnification of 920 kx, at which the atomic layers of graphitic carbon can be seen. The graphitic layers are apparent in this micrograph. It is very surprising that complete recrystallization to graphitic carbon can be realized by the presence of metal particles capable of forming metal carbides at a relatively low temperature of 700°C.

## Claims

1. Process for the production of metal-carbon containing bodies comprising ferromagnetic metal particles encapsulated by graphitic carbon layers, which process comprises impregnating cellulose, cellulose-like or carbohydrate bodies with an aqueous solution of at least one metal compound, followed by heating the impregnated bodies in an inert and oxygen-free atmosphere at a temperature above 700°C, thereby reducing at least part of the at least one metal compound to the corresponding metal or metal alloy, and wherein the metal(s) is (are) selected from iron, nickel, cobalt or alloys thereof.

2. Process according to claim 1, wherein the ferromagnetic particle is nickel or a nickel alloy.

3. Process according to any one of claims 1-2, wherein the said cellulose, cellulose-like or carbohydrate bodies are produced from materials selected from soy, carbohydrates, such as sugar, cellulosic materials, microcrystalline cellulose, or mixture of two or more thereof.

4. Process according to claim 3, wherein the said material is soy flour, or a mixture of soy flour and sugar.

5. Metal-carbon containing bodies obtainable by the process of claims 1-2 for use as a catalyst.

6. Metal-carbon containing bodies according to claim 5, wherein the surface area of the bodies in between 100 and 1750 m²/g as determined by nitrogen adsorption is obtained by treating the particles with an acid material prior to heating.

## Patentansprüche

1. Verfahren zur Herstellung von Metallkohlenstoff enthaltenden Körpern, die durch graphitische Kohlenstoffschichten eingekapselte ferromagnetische Metallteilchen umfassen, wobei das Verfahren das Imprägnieren von Cellulosekörpern, celluloseartigen Körpern oder Kohlenhydratkörpern mit einer wässrigen Lösung von wenigstens einer Metallverbindung, gefolgt vom Erhitzen der imprägnierten Körper in einer inerten und sauerstofffreien Atmosphäre bei einer Temperatur oberhalb von 700 °C umfasst, wodurch wenigstens ein Teil der wenigstens einen Metallverbindung zu dem entsprechenden Metall oder der entsprechenden Metalllegierung reduziert wird und wobei das bzw. die Metall (e) aus Eisen, Nickel, Cobalt oder Legierungen davon ausgewählt ist bzw. sind.

2. Verfahren nach Anspruch 1, wobei es sich bei dem ferromagnetischen Teilchen um Nickel oder eine Nickellegierung handelt.

3. Verfahren nach einem der Ansprüche 1-2, wobei die Cellulosekörper, celluloseartigen Körper oder Kohlenhydratkörper aus Materialien, die aus Soja, Kohlenhydraten wie Zucker, cellulosehaltigen Materialien, mikrokristalliner Cellulose oder Mischungen von zwei oder mehr davon ausgewählt sind, hergestellt sind.

4. Verfahren nach Anspruch 3, wobei es sich bei dem Material um Sojamehl oder eine Mischung aus Sojamehl und Zucker handelt.

5. Metallkohlenstoff enthaltende Körper, erhältlich durch das Verfahren nach den Ansprüchen 1-2, zur Verwendung als Katalysator.

6. Metallkohlenstoff enthaltende Körper nach Anspruch 5, wobei die gemäß Stickstoffadsorption bestimmte zwischen 100 und 1750 m²/g liegende Oberfläche der Körper erhalten wird, indem die Teilchen vor dem Erhitzen mit einem Säurematerial behandelt werden.

## Revendications

1. Procédé pour la production de corps contenant du métal-carbone comprenant des particules de métal ferromagnétique encapsulées par des couches de carbone graphitique, lequel procédé comprenant l'imprégnation de corps de cellulose, de type cellulose ou de glucide avec une solution aqueuse d'au moins un composé métallique, suivie par le chauffage des corps imprégnés dans une atmosphère inerte et exempte d'oxygène à une température supérieure à 700 °C, réduisant ainsi au moins une partie de l'au moins un composé métallique en le métal ou l'alliage métallique correspondant, et le métal ou les métaux étant choisi(s) parmi le fer, le nickel, le cobalt et des alliages correspondants.

2. Procédé selon la revendication 1, la particule ferromagnétique étant du nickel ou un alliage de nickel.

3. Procédé selon l'une quelconque des revendications 1 et 2, lesdits corps de cellulose, de type cellulose ou de glucide étant produits à partir de matières choisies parmi le soja, des glucides, tels qu'un sucre, des matières cellulosiques, de la cellulose microcristalline, et un mélange de deux ou plus de ceux-ci.

4. Procédé selon la revendication 3, ladite matière étant de la farine de soja ou un mélange de farine de soja et de sucre.

5. Corps contenant du métal-carbone pouvant être obtenus par le procédé selon les revendications 1 et 2 pour une utilisation en tant que catalyseur.

6. Corps contenant du métal-carbone selon la revendication 5, l'aire surfacique des corps comprise entre 100 et 1 750 m²/g telle que déterminée par adsorption d'azote étant obtenue par traitement des particules avec une matière de type acide avant le chauffage.
